(19) **Europäisches Patentamt / European Patent Office / Office européen des brevets**

(11) **EP 1 678 482 B1**

(12) **EUROPEAN PATENT SPECIFICATION**

(45) Date of publication and mention
of the grant of the patent:
**09.03.2011 Bulletin 2011/10**

(51) Int Cl.:
***G01N 21/64*** (2006.01)

(21) Application number: **04785225.6**

(22) Date of filing: **29.09.2004**

(86) International application number:
**PCT/US2004/031877**

(87) International publication number:
**WO 2005/033746 (14.04.2005 Gazette 2005/15)**

(54) **FREQUENCY DOMAIN LUMINESCENCE INSTRUMENTATION**

FREQUENZDOMÄNENLUMINESZENZINSTRUMENTIERUNG

INSTRUMENTS MESURANT LA LUMINESCENCE DANS LE DOMAINE DES FREQUENCES

(84) Designated Contracting States:
**AT BE BG CH CY CZ DE DK EE ES FI FR GB GR HU IE IT LI LU MC NL PL PT RO SE SI SK TR**

(30) Priority: **29.09.2003 US 506813 P**

(43) Date of publication of application:
**12.07.2006 Bulletin 2006/28**

(73) Proprietor: **Photosense L.L.C.**
**Boulder, CO 80304 (US)**

(72) Inventors:
• **BALTZ, Nathan, T.**
**Boulder, CO 80301 (US)**
• **DANIELSON, J. D. Sheldon**
**Boulder, CO 80304 (US)**

(74) Representative: **Kudlek & Grunert Patentanwälte**
**Postfach 33 04 29**
**80064 München (DE)**

(56) References cited:
WO-A-02/40972    US-A- 4 845 368
US-A- 5 281 825    US-A- 5 315 993
US-A- 5 459 323    US-A- 5 757 013
US-A- 6 157 037    US-B1- 6 602 716
US-B1- 6 602 716

• LIN HAI-JUI ET AL: "Lifetime-based pH sensors:
Indicators for acidic environments" 10 April 1999
(1999-04-10), ANALYTICAL BIOCHEMISTRY,
VOL. 269, NR. 1, PAGE(S) 162-167 , XP002476463
ISSN: 0003-2697
• QING CHANG ET AL: "Steam-sterilizable,
fluorescence lifetime-based sensing film for
dissolved carbon dioxide" March 1998 (1998-03),
BIOTECHNOL PROG; BIOTECHNOLOGY
PROGRESS MAR-APR 1998 AICHE, NEW YORK,
NY, USA, VOL. 14, NR. 2, PAGE(S) 326 - 331 ,
XP002476464
• ARNAUD A ET AL: "Strain and temperature
effects on erbium-doped fiber for decay-time
based sensing" January 2000 (2000-01), REVIEW
OF SCIENTIFIC INSTRUMENTS, AMERICAN
INSTITUTE OF PHYSICS, US, PAGE(S) 104-108 ,
XP012037678 ISSN: 0034-6748

EP 1 678 482 B1

**Description**

**1. Field Of The Invention**

This disclosure pertains to methods and instruments that use luminescence phenomena to achieve quantitation measurements, for example, in optical sensing measurements to assess concentration of an analyte. More particularly, the methods and instruments may achieve automatic compensation for extraneous phase response when measuring a luminescent lifetime by use of an auxiliary light source.

*2. Description Of The Related Art*

Luminescence pertains to the emission of light by materials. Fluorescence and phosphorescence are luminescence phenomena that occur following stimulation or excitation of a material by photons or electrons. These phenomena are of particular interest when used in sensors. Fluorescence and phosphorescence have been used to determine temperature and strain, as reported by A. Arnaud, D I Forsyth, T Sun, Z Y Zhang and K T V Grattan, "Strain and temperature effects on Erbium-doped fiber for decay-time based sensing," Rev. Sci. Instrum., 71, pp. 104-8 (2000); oxygen as reported in United States Patent No. 4845368 issued to Demas and United States Patent No. 5,043,286 issued to Khalil; pH as reported by Hai-Jui Lin, Henryk Szmacinski, and Joseph R. Lakowicz, "Lifetime-Based pH Sensors: Indicators for Acidic Environments," Analytical Biochemistry 269, 162-167 (1999); $CO_2$ as reported by Q. Chang, L. Randers-Eichhom, J.R. Lakowicz, G. Rao., Biotechnology Progress 1998, 14, 326-331), and ions as reported by Sheila Smith et. al."Fluorescence energy transfer sensor for metal ions," Proc. SPIE Vol. 2388, p. 171-181, Advances in Fluorescence Sensing Technology II; Joseph R. Lakowicz; Ed. May 1995.
The effect of a particular analyte on a luminescent material generally results from a change in the quantum efficiency of the luminescence process. This change manifests itself as a difference in the observed decay rate or lifetime of luminescent material. While the observed steady state luminescence intensity also changes and may be measured to quantify the analyte, the measurement of lifetime is more accurate because is it less affected by changes of intensity due to optical alignment, ambient light or changes in concentration of the luminescent sensor material, as discussed in Topics in Fluorescence Spectroscopy, ed J. Lakowicz, Vol. 4, Chap 10.
For a given optical sensor the lifetime, $\tau$, is generally related to analyte concentration, [A], according to the following relationship from Topics in Fluorescence Spectroscopy, vol. 1, Chap 8, 2nd ed, ed. J.R. Lakowicz,1999:

$$\tau = \frac{1}{1 + K[A]} \tag{1}$$

In Equation (1), K is a quenching constant that is determined for each luminescence sensor formulation. Once K is determined for a particular sensor, one needs only to measure the lifetime to calculate the analyte concentration. The above Equation (1) represents a sensor with ideal quenching kinetics. Luminescent sensors may depart significantly from this model, in which case an empirically derived equation relating lifetime to analyte concentration may be used. If the sensor is in an environment where temperature fluctuates significantly, it may be necessary to include the measured temperature as part of the empirically derived relationship. Equation (2) below represents generally the manner of empirical relationship, which may be provided as a least squares fit or other type of correlation:

$$[A] = f(\tau, T), \tag{2}$$

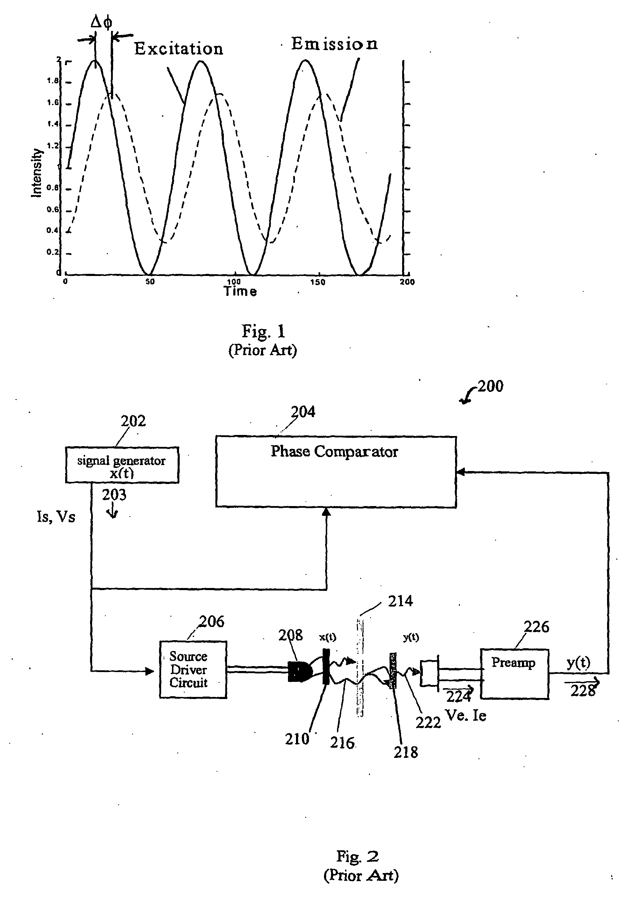

Here $\tau$ is luminescent lifetime and T is temperature of the sensor.
Numerous methods exist for of measuring the lifetime of a luminescent oxygen sensor. For example, United States Patent No. 5,043,286 issued to Khalil describes the use of a time domain technique which calculates the ratio of a two box car integrations following rapid turn off of luminescence excitation provided by an LED. Other methods use a frequency domain where luminescence excitation incident on the oxygen sensitive coating is modulated in a periodic fashion, either sinusoidally, as a square wave, or other periodic waveform. Fig. 1 illustrates the emission of the luminescent material as a dashed line that lags in phase with respect to the excitation, which is shown as a solid line. The phase lag, generally measured in degrees, is denoted $\Delta\phi$. From the phase lag the lifetime may be calculated using the following relationship:

$$\tau = \frac{1}{2\pi f}\tan(\Delta\phi) \qquad\qquad (3)$$

For sensing applications using frequency domain, also known as phase domain, the phase can be substituted in Equation 2 to give the relationship

$$[\dot{A}] = f(\Delta\phi, T) \qquad\qquad (4)$$

where $\Delta\phi$ is the phase lag induced by the luminescent material, T is temperature, and [A] is analyte concentration.

Other calculation techniques exist, such as are described by Venkatesh Vadde and Vivek Srinivas in "A closed loop scheme for phase-sensitive fluorometry", American Institute of Physics, Rev. Sci. Instrum., Vol. 66, No. 7, July 1995, p. 3750, where a phase-locked loop is used to determine the phase shift and luminescence lifetime. United States Patent No. 4,716,363 issued to Dukes describes a method of monitoring the frequency that is required to achieve a constant phase delay through a luminescent material. Frequency may be related to lifetime by rearranging Equation (3) above. United States Patent No. 6,157,037 issued to Danielson describes the simultaneous variation of frequency and phase using a digital signal processor (DSP) to achieve a luminescence lifetime measurement. An analog oscillator circuit may be used to measure the lifetime of a fluorescent material, for example, as described in United States Patent No. 6,673,626 B1 issued to Rabinovich et al.

Pulse laser measurements described by Lakowicz et. al. in "2-GHz frequency-domain fluorometer," Rev. Sci. Instrum. 57(10) October 1986, utilize high frequency cross correlation measurements of lifetime using very short periodic pulses from a laser, such as 5 picosecond pulses. Phase delays at frequencies higher than the fundamental pulse frequency are measured using cross correlation of high-order harmonics of the pulse repetition rate.

All of the systems described above apply to direct or indirect measurements of the phase lag that is induced by the luminescent material. Even so, the techniques generally neglect the effect of extraneous phase lag that is introduced by the optical and electrical components of a luminescence lifetime measurement system. An extraneous phase lag may be defined as an appreciable phase lag that derives from something other than the phase lag arising from the luminescence lifetime phase shift phenomenon indicated as problem is generally defined as $\Delta\phi$ in context of Equations (3) and (4).

Fig. 2 below shows a prior art sensor system 200 for use in generating and detecting luminescence to perform a lifetime measurement in the phase or frequency domain.

A signal generator 202 generates an excitation signal 203, e.g., as a voltage signal $V_s$ or a current signal Is, according to a time-dependant function x(t). By way of example, the excitation signal 203 is a periodic excitation signal which may be a sine wave or square wave. The signal generator may be an analog or digital signal generator. The excitation signal 203 travels from the signal generator 202 to both a phase comparator 204 and source driver circuitry 206. The source driver circuitry 206 amplifies the excitation signal 203 and provides a current source that follows the excitation signal in intensity. The current output from the source driver circuitry 206 is applied to an optical excitation source 208, which produces excitation light 210 of varying intensity according to function x(t)' that closely follows the function x(t) as processed by the source driver circuit 206. The optical excitation source 208 is preferably a light emitting diode (LED), laser diode or vertical cavity surface emitting laser (VCSEL), but may be any other light source that can be modulated at a sufficiently high frequency. The modulated light 210 according to the function x(t)' stimulates photon emission light 212 in a time-dependant emission function y(t). Photon emission light 212 occurs by the activity of excitation light 210 on luminescent material in a luminescent sensor 214. The optical excitation source 208 is selected to emit light 210 in a bandwidth that includes a wavelength or wavelengths that induce corresponding photon emission light 212 in the luminescent sensor 214.

It will be appreciated that a portion of the excitation light 210 may continue through the luminescent sensor 214 into pathways shown generally in Fig. 1 as the photon emission light 212. A pair of complementary optical color filters 216, 218 may be used to tune sensor system 200 for rejection of undesirable wavelengths of light. The color of the optical excitation source 208 and excitation filter 216 are matched to the characteristics of the luminescent material in luminescent sensor 214. Likewise, the emission filter 218 is also selected according to the color of the luminescence emission. By way of example, where the excitation light 210 emitted by optical excitation source 208 is blue or green, a corresponding blue or green excitation filter 216 is used to narrow the band of blue or green excitation light 210 impinging upon the luminescent sensor 214. Where the photon emission light 212 is red, a red emission filter 218 is used to reduce or eliminate scattered excitation light 210 that passes through the luminescent sensor 214 from reaching a photo detector 220. Thus, light 222 may be filtered in this manner to select for a narrow bandwidth that enhances the signal output and quantitation from photo detector 220. The photo detector 220 may be, a photodiode, a photomultiplier tube, microchannel plate, avalanche photodiode, or other type of photo detector. The light 222 impinges on detector 220, which converts the light 222 to a detection signal 224, e.g., a voltage signal Ve or current signal Ie. The detection signal 224 embodies information from the emission function y(t). A preamplifier 226 operates upon detection signal 224 to provide an amplified output signal 228 having the form of function y(t)'. The amplified output signal 228 passes to phase comparator 204.

The phase of the emission function y(t) lags the phase of the excitation function x(t)' by an amount relating to the luminescence lifetime of the luminescent material, according to Equation (3) above. The phase comparator 204 measures the phase difference between the excitation signal 203 and the amplified output signal 228. If the phase lag in all electrical and optical components within sensor system 200 are negligible when compared to the phase lag introduced by the luminescent material, then the phase difference that is measured by the phase comparator can be taken as the phase lag of the luminescent material in the luminescent sensor 214. This phase difference can be used, by way of example, to determine the lifetime using Equation 3 above or to determine analyte concentration using Equation (4) above.

The foregoing description of sensor system 200 is a generic sensing arrangement for monitoring luminescent lifetime by measuring phase shift. Any one of the time or frequency domain lifetime measurement methods discussed above may use a configuration which is similar to the above diagram.

The foregoing calculation methodology described in context of Fig. 2 assumes, for example, that the excitation function x(t) = x(t)' and the emission function y(t) =y(t)'; however, significant measurement error may result from this assumption. This occurs because the electrical components of sensor system 200 may introduce appreciable changes to the phase difference measurements. As discussed above in context of Fig. 2, the time domain and frequency domain lifetime measurement techniques of the prior art generally suffer from the fact that the measured lifetime represents not only the phase lag introduced by the luminescent material, but also the extraneous phase lag that intercedes from use of the various optical and electrical components in sensor system 200.

By way of example, a blue LED from Panasonic (DigiKey Inc part # P465-ND) has a given emission bandwidth at 110 MHz with -10 db attenuation relative to low frequencies, and may be used as optical excitation source 208. At this frequency the phase lag due to the LED emission is significant when compared to nanosecond fluorescence lifetimes. If the physical distance between the optical excitation source 208 and the luminescent material in luminescent sensor 214 is sufficiently large, the phase lag due to transit time may also become significant. The detector 220 and preamplifier 226 add phase lag to the respective signals 224, 228. The time and frequency domain lifetime measurement methods discussed above cannot separate the extraneous phase lag introduced by optical components, electrical components and distance from the luminescent material.

A common strategy for correcting for the extraneous phase lag imparted by optical and electrical components is to measure a standard sample of known phase lag. For example, Lakowicz et. al. in "2-GHz frequency-domain fluorometer," Rev. Sci. Instrum. 57(10) October 1986, report use of the fluorescent dye Bengal rose in water at pH=9 for a standard fluorescence lifetime of 75 picosenconds. Alternatively Lakowicz et. al. use a 25 picosecond quartz plate etalon as a standard. Since the characteristics of such standard samples are well known, the extraneous phase of the luminescent lifetime measurement system can be measured over a range of modulation frequencies. With this information in hand, the extraneous phase can be subtracted before calculating the lifetime according to Equation (3).

The disadvantages of this technique are twofold. First, a standard sample is required, which is impracticable for many applications. Second, there is an assumption that the extraneous phase lag remains constant over time for any given instrument. In fact this is usually not the case. Environmental factors can cause the extraneous phase of the electronic and optical components to change. Large swings in temperature induce significant variations in phase lag of LEDs, photodiodes and associated electronics. A sensor instrument that is stationed outside the confines of a building must compensate for large variations in temperature. If the temperature induced changes in extraneous phase are not compensated for, accuracy of the measurement of lifetime, and hence quantification of analyte will suffer. Ageing of optical and electronic components may also lead to significant changes in extraneous phase lag. Another disadvantage of this system is a requirement for operator intervention where the operator must replace the normally used luminescent sensor with the standard luminescent sensor to calibrate the lifetime measuring system.

To partially overcome these problems, US-B1-6 602 716 discloses a method for determining the luminescence decay which applies one excitation source onto two luminescent materials of which one is used as reference. Phase modulation is disclosed as detection mechanism. However, a standard sample still is required, which, as mentioned, might be impracticable for many applications.

Proposed solutions to the extraneous phase problem are complex and costly in implementation. Other methods of measuring and correcting for extraneous phase use wavelength selection to select for and detect the higher energy luminescence excitation. If only the higher energy luminescence excitation is detected, it contains only the extraneous phase of the electro-optical components. By way of example, Riedel in WO 01/22066 A1 describes use of a microprocessor to select and mechanically place different optical filters in front of the photo detector used to monitor luminescence emission. When a long wavelength-pass optical filter is selected, the detector measures only the luminescence emission of the material. When a short-pass filter is selected, the detector monitors only the higher energy excitation light. European Patent EP 0 702 226 B1 discloses a method for using a wavelength selecting element in front of a detector to directly monitor the higher energy excitation wavelengths, similar to Riedel above. These methods can be used to correct for extraneous phase, however at the expense of a more complicated optical configuration requiring mechanical selection of optical filters.

It is therefore of interest to develop instrumentation that can as accurately as possible determine lifetime, with minimal disturbance from extraneous phase changes over wide range of temperatures, environmental conditions and age of components.

## SUMMARY

The instrumentalities described below overcome the problems outlined above and advance the art by providing a simplified solution to the extraneous phase lag problem.

A frequency domain luminescence system is used to determine at least one of a phase lag and a luminescence lifetime. The system is improved by providing a second optical source in addition to a conventional optical excitation source that produces a luminescent response in a luminescent sensor. The second optical source emits in a spectrum that does not induce a luminescent response in the luminescent sensor. Light from the second optical source may be, for example, in preferred embodiments, an LED that emits light in the emission band of the luminescent material. Sensing of the light from this second optical source provides a good approximation of the extraneous phase lag in the system, particularly where the second optical source is selected to have an emission lag which closely approximates that of the optical excitation source. The second optical source may emit, for example, at 800 nm to 1100nm.

The system may operate in two modes including a calibration mode and a quantitation mode. In the quantitation mode, the system is effective to assess an analyte concentration where the analyte is in contact with the luminescent sensor. In the calibration mode, the system performs a self calibration to correct for extraneous phase lag. In either mode the relevant optical sources may be operated, for example, at a constant frequency ranges from 1 kHz to 1 MHz or from 1 MHz to 2 GHz where the driven signals may be, respectively in complementary nature, sine waves, square waves, periodic train of pulses, another patterns, or combinations thereof. The driven signal frequency may be much higher with subsequent heterodyning or downconversion of the detector signal.

## BRIEF DESCRIPTION OF THE DRAWINGS

Figure 1 illustrates a luminescence lifetime phenomenon as a phase lag between excitation and emission events where the luminescence lifetime may be used for quantitation of an analyte concentration;

Fig. 2 is a block schematic diagram of a prior art sensor system that does not correct for extraneous phase lag;

Fig. 3 is a block schematic diagram showing a sensor system that corrects for extraneous phase delay according to the instrumentalities disclosed herein;

Fig. 4 is a block schematic diagram that illustrates a switching configuration that places the sensor system in a calibration mode;

Fig. 5 illustrates an alternative embodiment where a backprojection sensor is used in the sensor system;

Fig. 6 is a graph showing ambient temperature variations that were used to test one embodiment of the sensor system;

Fig. 7 shows experimental data confirming that sensed quantification phase lag results do vary with temperature variations as extraneous phase lag;

Fig. 8 shows a calibration phase lag that similarly varies with temperature;

Fig. 9 shows a corrected or true luminescence phase lag that is achieved by deducting the quantification phase lag from the calibration phase lag to correct for system temperature effects; and

Fig. 10 is a flowchart that illustrates one embodiment of user-selectable control logic for the sensor system.

## DETAILED DESCRIPTION

There will now be shown and described a sensor system that incorporates a technique for eliminating extraneous emission from the measurements. This nonlimiting disclosure is by way of example to show implementation of preferred materials and methods.

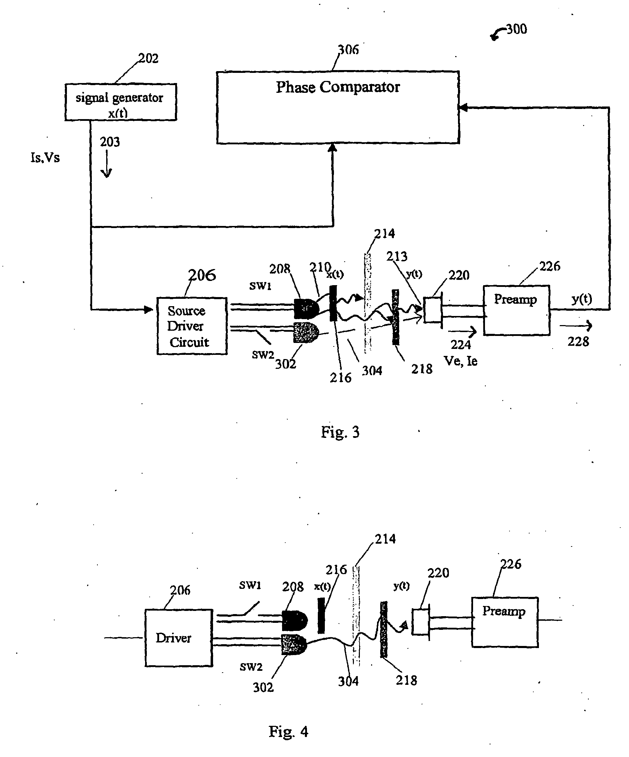

Fig. 3 is a schematic block diagram of sensor system 300. Identical components with respect to sensor system 200 shown in Fig. 2 retain identical numbering with respect to Fig. 3, except as noted below. Light indicated generally as light 210,212, 222 travels on a fist optical pathway. Sensor system 300 differs from sensor system 200 by the addition of emission band light source 302 and electronically controllable switches SW1 and SW2. The emission band light source 302 may be selectively energized by closure of SW2 to emit light in a bandwidth that encompasses the emission spectrum or wavelength of the luminescent material in the luminescent sensor 214. For example, where the emission spectrum is red; the emission band light source 302 may be a red LED, red laser diode, or red VCSEL. Switch SW1 may be opened to cease emissions from optical excitation source 208 while SW2 closed to drive emission band light source 302 according to function x(t), which is embodied in signal 203 and driven by source driver circuitry 206. Emission band light source 302 may also be driven simultaneously with optical excitation source 208, but this mode of operation is less preferred. Activation of emission band light source 302 causes emission of light in the emission band of luminescent sensor 214 to travel on pathway 304, through luminescent sensor 214 to impinge upon detector 220. Detector 220 is capable of detecting light on pathway 304.

The modulated light from the emission band optical source 302 is not absorbed and emitted by the luminescent behavior of the luminescent sensor 214. Passage of light on pathway 304 merely scatters, diffuses, and transmits the light on pathway 304. The emission band optical source 302 is preferably selected to have a phase response or emission delay characteristic which is similar to that of the optical excitation source 208 because this type of selection provides the best approximation of extraneous phase lag.

The signal output from preamplifier 226 following emission on pathway 304 contains the extraneous phase lag of the electronic and optical components of the sensor system 300, with no phase lag contribution from the luminescent sensor 214. One particular advantage of the embodiment shown is that the phase comparator may by signal arrangement automatically open and close switches SW1 and SW2 in a predetermined way. Closure of SW1 with opening of SW2, as shown in Fig. 3, represents a quantitation mode in which quantitation is performed with correction for extraneous phase lag. In quantitation mode, an analyte (not shown) is interacting with the luminescent sensor 214 in a conventional way for diffusion of an analyte into the luminescent sensor 214. Conversely, opening of SW1 with closure of SW2 as shown in Fig. 4 represents a calibration mode to assess the extraneous phase lag for use in the quantitation mode. Phase comparator 304 may switch between the respective modes to perform a real-time extraneous phase lag correction between successive measurements or periodically throughout a system of measurements. In this sense, "real time" means that there has been insufficient time for the analyte and/or environmental conditions to change the optical behavior of the luminescent sensor 214 between conduct of quantitation mode measurements and calibration mode measurements This real-time phase correction provides a more accurate measurement of the luminescent lifetime or phase lag without requiring the use of standard samples or complex compensation mechanisms.

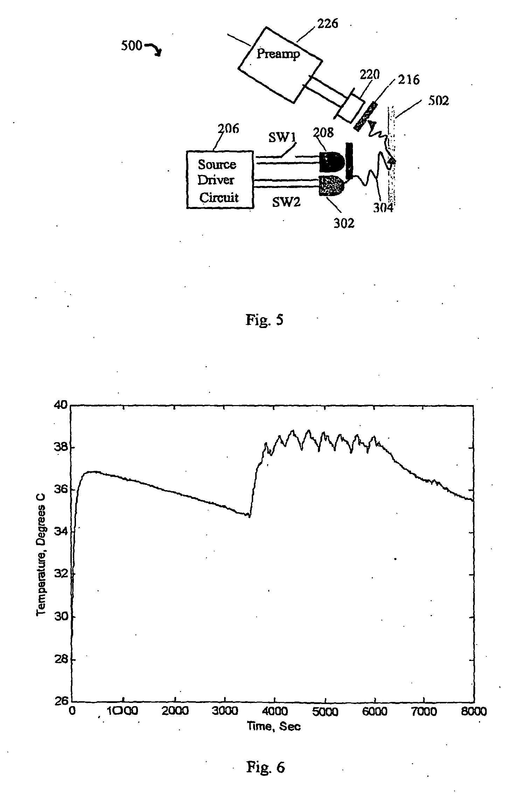

It will be appreciated that a backprojection sensor may be substituted for luminescent sensor 214 as shown in Fig 3 with the same effect where pathway 304 is a reflective pathway. Fig. 5 shows one such arrangement in backprojection system 500 where a conventional backprojection sensor 502 replaces luminescent sensor 214 of Figs. 3 and 4 to establish a reflective pathway 304.

In one embodiment, a blue LED is used as optical excitation source 208 in combination with a blue optical filter 216 to excite a luminescent oxygen sensor 214. The luminescent oxygen sensor 214 emits red light which passes through a red emission filter 218 before striking a photodiode detector 220. Determination of the true phase lag of the luminescent oxygen sensor 214 entails two separate measurements. First the phase lag through the system 300 using the blue LED optical excitation source 208 is measured at a modulation frequency of 11 kHz according to signal 203 and function x(t) with closure of SW1 and opening of SW2 to establish a quantitation mode. Next SW1 is opened, disabling the blue LED optical excitation source 208. SW2 is closed for activation of a red LED emission band source 302 to establish a calibration mode. Another phase lag measurement is made when modulating the red LED emission band source 302 at 11 kHz according to signal 203 and function x(t).

The phase lag due to the luminescent oxygen sensor is then simply calculated as follows.

$$\Delta\phi_{sensor}=\Delta\phi_Q-\Delta\phi_C \qquad\qquad (5)$$

where phase comparator 306 uses $\Delta\phi$ sensor as the true luminescence phase lag $\Delta\phi$ in Equation (2), (3) or (4), $\Delta\phi_Q$ is quantitation mode phase lag; and $\Delta\phi_C$ is the calibration mode phase lag. The phase lags $\Delta\phi_Q$, and $\Delta\phi_C$ need not be measured absolutely and in high accuracy if the relative phase difference between $\Delta\phi_Q$ and $\Delta\phi_C$ is accurate. Mathematically equivalent true phase lag calculations resulting from different methods used in the phase comparator 306, e.g., using derivative methods or finite difference methods analyzing signals 203, 228 other than strictly by subtraction, do not affect this measurement so long as the operative principle of eliminating the calibration phase lag is observed. The ordering of quantitation and calibration modes may be in any order, such as by placing the calibration measurement before the quantitation measurement, by interspersing the calibration measurement throughout a plurality of quantitation measurements, or by averaging a plurality of calibration and/or quantitation measurements.

**COMPARATIVE EXAMPLE**

The utility of this two step measurement method is illustrated when the temperature of the electronics and optics drift with fluctuations in room temperature or by heating or cooling of electrical components by-virtue of frequency of measurement. In one test apparatus, the two quantities $\Delta\phi_Q$ and $\Delta\phi_C$ were measured continuously in repeat intervals over 8000 seconds. The luminescent sensor 214 was kept in a constant temperature and oxygen environment, so as not to alter the phase lag and luminescent lifetime by changes in the analytical environment during the experiment.

The phase measurement system 300 including a blue LED as optical excitation source 208 and a red LED as the emission band source 302 , the a photodiode detector 220, preamplifier 226 and phase comparator 306 were exposed to ambient indoor conditions. The ambient temperature was monitored centrally with respect to sensor system 300. The ambient temperature fluctuated due to warm-up of the electronics and influence of the laboratory air conditioning system, as shown in Fig. 6. Significant variations in temperature occurred over the 8000 second experimental period.

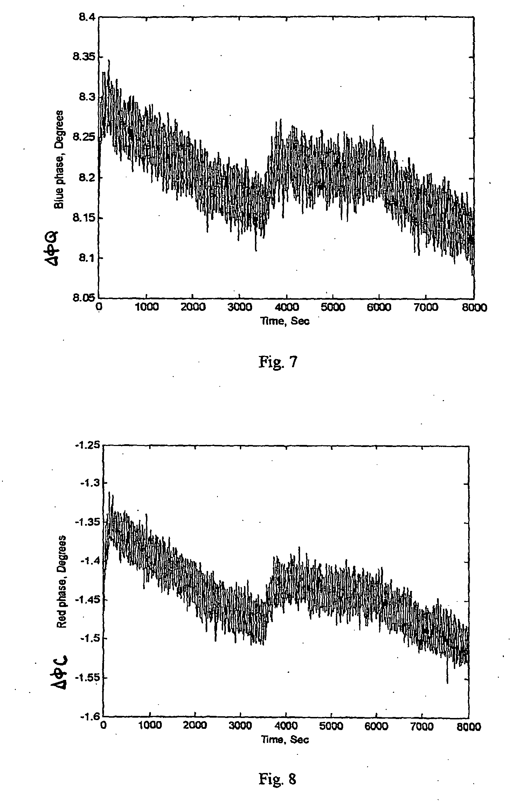

Figs. 7 and 8 show the measurements of the blue phase lag $\phi\Delta_Q$ (Fig. 7) and the red phase lag $\Delta\phi_Q$ (Fig. 8) in sensor system 300 over the same timeframe. The $\Delta\phi_Q$ and $\Delta\phi_C$ phase lag measurements were obtained alternately, the pair of measurements being made once every second. Both the sources 208, 302 were modulated at 11 kHz for these measurements.

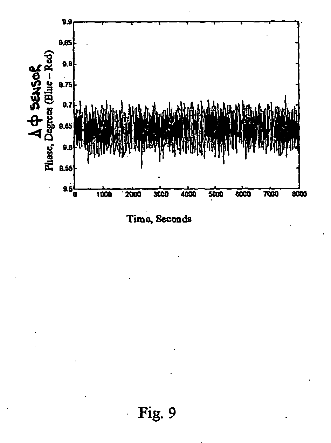

Comparing the $\Delta\phi_Q$ and $\Delta\phi_C$ phase lags shown in Figs. 7 and 8 to the temperature of Fig. 6 over the experiment duration, it is shown that the perturbations in measured phase correlate with changes in temperature. The phase lag due to the luminescent oxygen sensor, $\Delta\phi_{O2}$ sensor, was calculated by subtracting the red phase lag $\Delta\phi_C$ from the blue phase lag $\Delta\phi_Q$. In this system, using Equation (3), a phase shift of 9.65 degrees at 11 kHz modulation corresponded to a luminescence lifetime of 2.46 microseconds. This is shown in Fig. 9 where the value 9.65 approximates on average a horizontally-extending band of data representing the $\Delta\phi_{O2\ sensor}$ value of Equation (5).

It will be appreciated that the band of data shown in Fig. 9 encompasses a range of noise extending generally between 9.5 and 9.7, but the best value may be calculated as an arithmetic average where this band is immune to the perturbations shown in Figs. 7 and. If the manner of calculating without correction for extraneous phase lag, the noise would range from 8.1 to 8.3 over the experiment, as shown in Fig. 7. Any value in this range would be appreciably in error with respect to about 9.65 (see Fig. 9).

This example shows that correction of extraneous phase lag significantly reduced the variations due to environmental temperature effect on the measurement optics and electronics. As a result the lifetime of the luminescent oxygen sensor was more accurately measured, in turn giving a more accurate measurement of oxygen concentration in the analyte.

The foregoing example demonstrates the use of optical phase correction with a luminescent oxygen sensor. Table 1 below identifies various oxygen-sensitive luminescent materials that may be used as the luminescent material in sensor 214 when sensor 214 is an oxygen sensor.

**TABLE 1: LUMINESCENT DYES SUITABLE FOR OXYGEN SENSING.**

| Dye | Excitation | Emission | Lifetime in absence of oxygen |
|---|---|---|---|
| palladium octaethyl porphyrin (PdOEP) | 390, 536 | 670nm | 1.6msec |
| Platinum octaethyl porphyrin (PtOEP) | 382,532n m | 650nm | 100$\mu$sec |
| platinum pentafluoryl-tetraphenyl porphyrin (PtTFPP) | 390,536n m | 660 | 78$\mu$sec |
| ruthenium(bathophenanthrolene) | 450nm | 620nm | 5$\mu$sec |
| PtOEPK Pt(II) (octaethylporphine) ketone [Porphyrin Products] | 450nm | 750nm | 60$\mu$sec |

The excitation of these materials is ideally compatible with solid state light emitting diodes, or laser diodes, and the emission is preferably detectable using silicon photodiodes. The luminescent lifetime in the absence of oxygen influences the sensitivity of the oxygen sensor. Selection of the luminescent material depends upon conditions in the intended environment of use. For example, PdOEP has a very long lifetime and, consequently, is suitable for use with analytes having very low concentrations of oxygen. At high concentrations of oxygen, PdOEP is highly quenched and unsuitably dim to make an accurate lifetime measurement.

Other well suited luminescent dyes are described by Papkovsky, D. B., "Luminescent porphyrins as probes for biosensors," Sens and Act B 11 (1993) 293-300 and Papkovsky, D.-B., "New Oxygen sensors and their application to Biosensing," Sens and Act B 29 (1995), 213-218 and J. N. Demas, B. A. DeGraff, "Design and Application of Highly Luminescent Transition Metal Complexes," Anal. Chem. vol 63 n17 829-37, 1991.

Table 2 lists various oxygen-permeable polymer matrices that have been successfully used with oxygen-sensitive luminescent dyes. Generally, the luminescent sensor 214 includes a polymer matrix into which an analyte can diffuse, where a luminescent material is dispersed to substantial homogeneity in the polymer matrix. By way of example, the decision to use a particular polymer with a particular oxygen sensitive dye depends principally on the luminescence lifetime in the absence of oxygen and the oxygen permeability of the polymer. The pairing of a very long lifetime dye (e.g. PdOEP) with a highly permeable polymer, e.g. Rev-118 Silicone, may be suitable for low concentrations of oxygen, i.e. below 1 ppb dissolved in water. This same combination would probably not be suitable for higher concentrations of oxygen found in water near standard atmospheric pressure, composition and temperature because the sensor would be too highly quenched for accurate measurements. In general a "good" polymer and dye combination gives a dynamic range of 5 to 10 over the range of oxygen concentration expected in the analyte. Dynamic range is defined as the intensity or lifetime at the lowest oxygen concentration divided by the lifetime or intensity at the highest oxygen concentration.

**TABLE 2: OXYGEN PERMEABLE POLYMER MATRICES**

| Polymer | Physical properties | Oxygen Permeability |
|---|---|---|
| polymethyl methacrylate (PMMA) | hard, durable | very low |
| dimethly-siloxane co-block bisphenyl A | hard durable | moderate |
| acrylic random copolymer | flexible | high |
| fluorinated acrylic random copolymer | flexible | high |
| fluorinated silane random copolymer | flexible | very high |
| RTV-118 Silicone (General Electric) | rubbery | very high |
| polystyrene | hard | moderate |
| fluorinated polystyrene | hard | high |

Oxygen sensors typically require modulation frequencies from 2kHz to 1000kHz, depending on the type of luminescent material that is used to accurately measure the luminescent lifetime. Other analytes may, for example, use excitation frequencies above those used for oxygen sensors. The use with excitation frequencies from 1MHz to 2 Ghz is particularly useful for fluorescence sensors that measure glucose, pH, Ca2+ and other ions and chemical species.

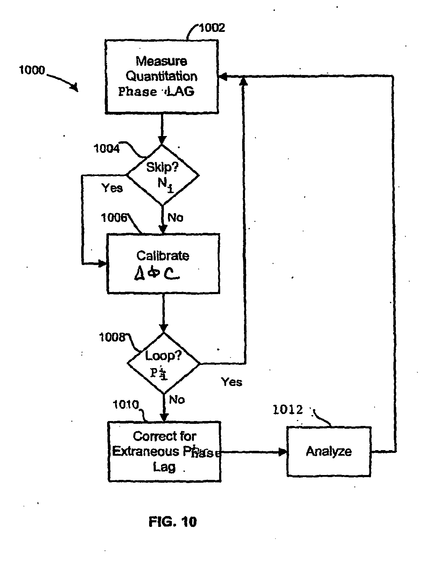

Fig. 10 is a flowchart that shows programmable modes of operation for sensor system 300 as shown in Fig. 3 and described above. The operational logic of process 1000 may be implemented by program instructions or circuitry, for example, as provided in the phase comparator 306 or any other processing unit. The program instructions may be used on a single processor with associated memory or in a distributed processing environment.

A quantitation action 1002 of measuring a quantitation phase lag in a luminescent sensor is followed by a test 1004 to ascertain whether system 300 has been instructed to skip calibration on a particular iteration form among N such iterations, for example, to perform one calibration in step 1006 for every three passes through action 1002. Action 1002 occurs with the system 300 in quantitation mode, as described above. Calibration step 1006 involves using the sensor system 300, generally, electro-optic equipment, in calibration mode to determine the calibration phase lag. Loop test 1008 inquires whether it is appropriate on the basis of P iterations to loop back to the quantitation action 1002 or proceed to step 1010 for correction of extraneous phase lag according to Equation (5).

The programmable variations indicated in Fig. 10 permit, for example, the use of a varying frequency applied in a pattern from signal generator 202 to drive the optical excitation source 208 during the quantitation action 1002 and again in the calibration step 1006, but in different time domains with storage of resulting phase lag values $\Delta\phi Q$ and $\Delta\phi C$ in system memory for use in the step of correcting 1010 to produce $\Delta\phi$ sensor, i.e., the true luminescence phase lag. This value may be used to analyze the concentration of an analyte that is in contact with luminescent sensor 214, by Equations (3), (4), or other calculations known in the art.

The phase compensation scheme discussed above is applicable to any phase/frequency-based method for measuring luminescent lifetime or phase retardation of a periodic optical signal. For example, the lifetime measurement systems and methods that are described in United States Patents 4,716,363, 5,646,734, or 4,845,368 may be modified as shown in Figs. 3 and 4 to correct for extraneous phase lag. Systems using phase comparators of any kind may benefit from the presently disclosed system and method. Phase comparators using a two-phase lock-in or Fourier transform method may also benefit from modification to include the system and method that is presently disclosed.

The phase compensation scheme is also useful when with a servo-feedback-loop phase comparator. The phase measurement method used by Venkatesh Vadde and Vivek Srinivas "A closed loop scheme for phase-sensitive fluorometry", American Institute of Physics, Rev. Sci. Instrum., Vol. 66, No. 7, July 1995, p. 3750 is a phase comparator that uses a servo feedback loop to optimize the determination of phase between the excitation signal and the luminescent emission. In this method the phase comparator uses a servo feedback loop that adds additional phase shift to the luminescence emission signal until the modified emission signal is 90 degrees out of phase with the excitation signal. The additional phase shift is subtracted from 90 degrees to obtain the phase shift between the excitation signal and the luminescent emission signal. The extraneous phase can be corrected in this example by making a second measurement using the red reference LED in place of the blue excitation LED, and subtracting the result from the prior measurement of the luminescent emission signal phase.

The embodiments described above use primarily a constant modulation frequency emanating from signal generator 202 for determination of luminescent lifetime. Other equally suitable embodiments may utilize a variable modulation frequency with a constant or variable phase shift through the luminescent material. By way of example, United States Patent 4,716,363 issued to Dukes, and United States Patent 6,157,037 issued to Danielson teach the use of variable modulation frequency of the excitation signal The Dukes patent uses a phase comparator that demands a constant phase shift between the excitation signal and the luminescent emission. The phase comparator adjusts the modulation frequency of the excitation light source to achieve a certain constant phase shift, e.g. 45 degrees, between the excitation and the luminescent emission. The phase comparator used by Danielson demands a variable, frequency dependent phase shift between the excitation signal and the luminescent emission. The phase comparator simultaneously adjusts the excitation frequency and the phase shift requirement. In this case the preferred embodiment is to measure the calibration phase lag through the system over all anticipated frequencies in advance of switching to the quantitation mode. The phase offset as performed by the Dukes or Danielson method is continuously corrected using the previously measured calibration phase lag. If the modulation frequency does not exactly match a frequency at which a calibration phase lag measurement is made, then interpolation may be used to more accurately determine the phase correction.

Another embodiment exists where the phase comparator uses downconversion. In this embodiment the modulation frequencies in the quantitation and calibration modes are higher than the frequency at which the phase comparator measures the phase lag. In a phase comparator using downconversion, the modulation frequencies of the excitation and the emission are converted to lower frequencies while preserving their phase relationship. By way of example, this embodiment may use heterodyning or downconversion of the modulated luminescence emission before determination of phase lag. By way of example, United States Patent No 5,196,709 teaches the use of downconverting the modulated luminescence emission to a lower frequency for determination of phase lag. European Patent Application EPA 1988-03-16 0259973/EP-A2 "Fluorometric sensor system using heterodyne technique" discusses the heterodyne technique. These systems may be modified to include instrumentalities as presently shown and described to correct for extraneous phase lag.

It will be appreciated that optical excitation source 208 and emission band source 302 are selected to emit at different wavelengths to the uses described above. Although it is preferred that the emission band of optical source 302 persists at a wavelength which is inherent to the emission spectrum of luminescent sensor 214 but does not induce corresponding luminescent emission, this is not a strict requirement. By way of example, a choice of LEDs may be appropriately matched to the absorption and emission spectra of the luminescent material and the characteristics of the excitation and emission color filters 216, 218. It is most convenient if the reference LED emits light at substantially the same color as the luminescent material emits. But LEDs often emit a relatively broad range of wavelengths, even if only weakly. The emission of some blue LEDs contain significant amounts of red light, so a blue LED could also be used to provide the light for measurement of a red phase lag. In this case, however, it may be necessary to use an optical filter in front of the blue LED that only allows red light to pass. Otherwise the blue LED would stimulate luminescence emission. A separate blue LED could also be used if it were coated with a sufficiently fast lifetime fluorescent material that emitted at substantially the same wavelength as the luminescent materials.

Another embodiment replaces an emission band source 302 its wavelengths of light substantially different from the excitation light source and from the luminescent emission. For example a near IR LED or laser diode, with emission from 800nm-1000nm could be used in conjunction with a 600nm-800nm red emitting luminescent material. If the emission filter were selected to allow for light of 800nm-1000nm to pass, an LED with a substantially longer wavelength output than the luminescent material could be used. This has one advantage that IR LED and laser diodes are widely used and available at a low cost.

Another embodiment does not sequentially measure quantization phase lag and then the calibration phase lag for every lifetime determination, but measures and records the calibration phase lag at a much lower occurrence. The recorded calibration phase lag may be subtracted from each quantitation phase lag measurement.

This is particularly useful if the phase of the luminescent sensor 214 needs to be measured at a high data rate without interruption. By way of example, the calibration phase lag may be measured and recorded at intervals of time, or intervals of measurements, instead of at every measurement.

A similar method uses a red LED as an emission band source that is modulated at a slightly different frequency than a blue or green LED that is used as excitation source 208. The red LED is modulated at a sufficiently different frequency so that its signal may be digitally filtered or separated from the luminescent emission of the sensor. If the phase response is sufficiently flat in the region of measurement, the correction phase may be used directly. If not, then prior knowledge of the phase/frequency slope could be used to adjust the correction. Alternatively, if the shape of the phase shift with frequency is known, the actual phase shift could be found by interpolation or extrapolation.

REFERENCES:

Arnaud, Forsyth, Sun, Zhang and Grattan, "Strain and temperature effects on Erbium-doped fiber for decay-time based sensing," Rev. Sci. Instrum., 71, pp. 104-8 (2000);
Chang, Randers-Eichhorn, Lakowicz, and Rao., Biotechnology Progress 1998, 14, pp. 326-331;
Danielson, United States Patent No. 6,157,037;
Demas, United States Patent No. 4,845,368;
Demas, DeGraff, "Design and Application of Highly Luminescent Transition Metal Complexes," Anal. Chem. vol 63 n17 829-37, 1991.
Dukes, United States Patent No. 4,716,363;
Khalil, United States Patent No. 5,043,286;
Lakowicz et. al., "2-GHz frequency-domain fluorometer," Rev. Sci. Instrum. 57(10) October 1986;
Lin, Szmacinski, and Lakowicz, "Lifetime-Based pH Sensors: Indicators for Acidic Environments," Analytical Biochemistry 269, 162-167 (1999);
Papkovsky, D. B., "Luminescent porphyrins as probes for biosensors," Sens and Act B 11 (1993) pp. 293-300;
Papkovsky, D. B., "New Oxygen sensors and their application to Biosensing," Sens and Act B 29 (1995), pp. 213-218;
Rabinovich et al., United States Patent No. 6,673,626 B1
Smith et. al."Fluorescence energy transfer sensor for metal ions," Proc. SPIE Vol. 2388, p. 171-181, Advances in Fluorescence Sensing Technology II; Joseph R. Lakowicz; Ed. May 1995;
Topics in Fluorescence Spectroscopy, ed J. Lakowicz, Vol. 4, Chap 10;
Vadde and Srinivas, "A closed loop scheme for phase-sensitive fluorometry", American Institute of Physics, Rev. Sci. Instrum., Vol. 66, No. 7, July 1995, p. 3750; and
Venkatesh, United States Patent No. 5,646,734.

**Claims**

1.  Method for determining at least one of a phase lag and luminescence lifetime of a luminescent material, comprising the steps of:

    measuring (1002) a quantitation phase lag in the luminescent material by use of electro-optical equipment on a first optical pathway that includes an optical excitation source (208), where the quantitation phase lag is measured (1002) by use of a signal that represents in part an extraneous phase lag;
    using the electro-optical equipment to determine a calibration phase lag by driving a second optical source (302) on a second optical pathway (304) through the luminescent material, the second optical source (302) emitting light that does not cause appreciable luminescence from the luminescent material; and
    correcting (1010) for the extraneous phase lag by removing the calibration phase lag from the quantitation phase lag to assess a true luminescence phase lag.

2.  The method of claim 1, wherein the step of using the electro-optical equipment includes emitting light from the second optical source (302) in wavelengths that are inherent to emissions from the luminescent material.

3.  The method of claim 1, wherein the step of measuring (1002) the quantitation phase lag and the step of using the electro-optical equipment each include operating a phase comparator (304) to determine a phase lag at a constant frequency of modulation.

4.  The method of claim 3, wherein the constant frequency ranges from 1 kHz to 1 MHz.

5.  The method of claim 1, wherein the step of measuring (1002) the quantitation phase lag includes modulating the optical excitation source (208) to emit at a time-variant frequency according to a pattern, and
    the step of using the electro-optical equipment includes a step of modulating the second optical source (302) to emit in the same pattern.

6. The method of claim 5, wherein the step of measuring (1002) the quantitation phase lag is performed a plurality of times and the correcting step (1010) provides a corresponding plurality of the true luminescence phase lags.

7. The method of claim 6, wherein the plurality of the true luminescence phase lags are substantially constant over an interval of time, except as affected by system noise other than the extraneous phase lag.

8. The method of claim 1, wherein the luminescent material used in the step of measuring (1002) the quantitation phase lag comprises a material having luminescence emission characteristics that are sensitive to oxygen concentration, and further comprising a step of using the true luminescence phase lag of the correcting step (1010) to assess an oxygen concentration in an analyte.

9. The method of claim 8, wherein the luminescent material includes a metallo-porphyrin.

10. The method of claim 8, wherein the luminescent material includes a ruthenium complex.

11. The method of claim 1, wherein the step of measuring (1002) the quantitation phase lag includes energizing the optical excitation source (208) to emit in a pattern selected from the group consisting of a square wave, a sine wave, a periodic train of pulses, and combinations thereof; and
the step of using the electro-optical equipment includes energizing the second optical source (302) in the same pattern.

12. The method of claim 1, wherein the step of measuring (1002) the quantitation phase lag includes energizing the optical excitation source (208) to emit at one or more frequencies ranging from 1 MHz to 2 GHz; and
the step of using the electro-optical equipment includes energizing the second optical source (302) to emit at the same one or more frequencies.

13. The method of claim 1, further comprising a step of applying the luminescent lifetime measurement to quantitate an analyte concentration.

14. The method of claim 13, wherein the analyte is selected from the group consisting of glucose, pH, ions, and combinations thereof.

15. The method of claim 1, wherein the step of measuring (1002) the quantitation phase lag entails modulating the optical excitation source (208) at a frequency that differs from a modulation frequency used in the step of correcting (1010) for extraneous phase lag.

16. The method of claim 1, wherein the step of measuring (1002) the quantitation phase lag entails using a servo feedback loop (1008) to optimize a determination of phase between an excitation signal and a luminescent emission.

17. The method of claim 1, wherein the step of measuring (1002) the quantitation phase lag entails modulating the optical emission source (208) to achieve a constant phase shift across the luminescent material.

18. The method of claim 1, wherein the step of measuring (1002) the quantitation phase lag entails modulating the optical excitation source (208) to achieve a modulation frequency-dependant phase shift across the luminescent material.

19. The method of claim 1, wherein the step of measuring (1002) the quantitation phase lag and the step of using the electro-optical equipment both include downconverting a detected signal at a phase comparator (306).

20. The method of claim 1, wherein the step of measuring (1002) the quantitation phase lag includes using the first optical source (208) to emit light in substantially different wavelength band than exists for an emission wavelength that is inherent to the luminescent material.

21. The method of claim 20, wherein the second optical source (302) emits in a range from 800-1100 nm.

22. The method of claim 1 performed in a repeat cycle wherein the step of using the electro-optical equipment is performed alternately with respect to the step of measuring the quantitation phase lag.

23. The method of claim 1, wherein the step of measuring (1002) the quantitation phase lag is performed a plurality of times and the step of using the electro-optical equipment is performed fewer times than the plurality of times to update the calibration phase lag on a periodic basis that may be used to perform the step of correcting.

24. The method according to claim 1, wherein the step of using the electro-optic equipment to determine a calibration phase lag includes recording the calibration phase lag,
performing the step of measuring (1002) the quantitation phase lag a plurality of times to provide a plurality of quantitation phase lag values;
and in the step of correcting (1010) use of the recorded phase lag in association with the plurality of quantitation phase lag values.

25. The method of claim 1, further comprising using the true luminescence phase lag to calculate a luminescence lifetime or reference analyte concentration.

26. System (300) for determining at least one of a phase lag and luminescence lifetime of a luminescent material, comprising:

means for measuring (1002) a quantitation phase lag in the luminescent material by use of electro-optical equipment on a first optical pathway that includes an optical excitation source (208), where the quantitation phase lag is measured by use of a signal that represents in part an extraneous phase lag;
means for using the electro-optical equipment to determine a calibration phase lag by modulating a second optical source (302) on a second optical pathway (304) through the luminescent material, the second optical source (302) emitting light that does not cause appreciable luminescence from the luminescent material; and means for correcting for the extraneous phase lag by removing the calibration phase lag from the quantitation phase lag to assess a true luminescence phase lag.

27. The system (300) of claim 26, wherein the means for using the electro- optical equipment includes means for emitting light from the second optical source in wavelengths that are inherent to emissions from the luminescent material.

28. The system (300) of claim 26, wherein the means for measuring the quantitation phase lag and the means for using the electro-optical equipment each include means for operating a phase comparator (306) to determine a phase lag at a constant frequency of modulation.

29. The system (300) of claim 28, wherein the constant frequency ranges from 1 kHz to 1 MHz.

30. The system (300) of claim 26, wherein the means for measuring the quantitation phase lag includes means for modulating the optical excitation source (208) to emit at a time-variant frequency according to a pattern, and
the means for using the electro-optical equipment includes means for modulating the second optical (302) source to emit in the same pattern.

31. The system (300) of claim 30, wherein the means for measuring the quantitation phase lag measures the quantitation a plurality of times and the means for correcting provides a corresponding plurality of the true luminescence phase lags.

32. The system (300) of claim 26, wherein the luminescent material used by the means for measuring the quantitation phase lag comprises a material having luminescence emission characteristics that are sensitive to oxygen concentration, and further comprising means for using the true luminescence phase lag of the correcting step to assess an oxygen concentration in an analyte.

33. The system (300) of claim 32, wherein the luminescent material includes a metallo-porphyrin.

34. The system (300) of claim 32, wherein the luminescent material includes a ruthenium complex.

35. The system (300) of claim 26, wherein the means for measuring the quantitation phase lag includes means for energizing the optical excitation source (208) to emit in a pattern selected from the group consisting of a square wave, a sine wave, a periodic train of pulses, and combinations thereof; and

the means for using the electro-optical equipment includes means for energizing the second optical (302) source in the same pattern.

36. The system (300) of claim 26, wherein the means for measuring the quantitation phase lag includes means for energizing the optical excitation source (208) to emit at one or more frequencies ranging from 1 MHz to 2 GHz; and the means for using the electro-optical equipment includes means for energizing the second optical source (302) to emit at the same one or more frequencies.

37. The system (300) of claim 26, further comprising means for applying the luminescent lifetime measurement to quantitate an analyte concentration.

38. The system (300) of claim 37, wherein the analyte is selected from the group consisting of glucose, pH, ions, and combinations thereof.

39. The system (300) of claim 1, wherein the means for measuring the quantitation phase lag includes means for modulating the optical excitation source at a frequency that differs from a modulation frequency used in the means for correcting for extraneous phase lag.

40. The system (300) of claim 26, wherein the means for measuring the quantitation phase lag includes means for using a servo feedback loop to optimize a determination of phase between an excitation signal and a luminescent emission.

41. The system (300) of claim 26, wherein the means for measuring the quantitation phase lag includes means for modulating the optical emission source to achieve a constant phase shift across the luminescent material.

42. The system (300) of claim 26, wherein the means for measuring the quantitation phase lag includes means for modulating the optical excitation source to achieve a modulation frequency-dependant phase shift across the luminescent material.

43. The system (300) of claim 26, wherein the means for measuring the quantitation phase lag and the means for using the electro-optical equipment both include means for downconverting a detected signal at a phase comparator.

44. The system (300) of claim 26, wherein the means for measuring the quantitation phase lag includes means for using the first optical source to emit light in substantially different wavelength band than exists for an emission wavelength that is inherent to the luminescent material.

45. The system (300) of claim 44, wherein the second optical source (302) emits in a range from 800-1100 nm.

46. The system (300) of claim 45 programmed with control instructions to operate in a repeat cycle wherein the means for using the electro-optical equipment operates alternately with respect to the means for measuring the quantitation phase lag.

47. The system (300) according to claim 26, wherein the means for using the electro-optic equipment to determine a calibration phase lag includes means for recording the calibration phase lag, means for performing the step of measuring the quantitation phase lag a plurality of times to provide a plurality of quantitation phase lag values; and the means for correcting uses the recorded phase lag in association with the plurality of quantitation phase lag values.

48. The system (300) of claim 26, further comprising means for using the true luminescence phase lag to calculate a luminescence lifetime or reference analyte concentration.

**Patentansprüche**

1. Verfahren zum Bestimmen einer Phasenverzögerung und/oder einer Lumineszenzlebensdauer eines Lumineszenzmaterials, das die folgenden Schritte umfasst:

Messen (1002) einer Quantifizierungsphasenverzögerung in dem Lumineszenzmaterial durch Verwenden einer elektrooptischen Anlage bzw. Ausrüstung in einem ersten optischen Weg, der eine optische Erregungsquelle (208) enthält, wobei die Quantifizierungsphasenverzögerung unter Verwendung eines Signals gemessen wird (1002), zum Teil externe bzw. äußere Phasenverzögerung repräsentiert;

Verwenden der elektrooptischen Anlage, um eine Kalibrierungsphasenverzögerung zu bestimmen, durch Ansteuern einer zweiten Lichtquelle (302) in bzw. auf einem zweiten optischen Weg (304) durch das Lumineszenzmaterial, wobei die zweite Lichtquelle (302) Licht emittiert, die keine merkliche Lumineszenz von dem Lumineszenzmaterial hervorruft; und

Korrigieren (1010) der externen Phasenverzögerung durch Entfernen der Kalibrierungsphasenverzögerung aus der Quantifizierungsphasenverzögerung, um eine wahre Lumineszenzphasenverzögerung zu schätzen.

2. Verfahren nach Anspruch 1, wobei der Schritt des Verwendens der elektrooptischen Anlage das Emittieren von Licht von der zweiten Lichtquelle (302) in Wellenlängen, die Emissionen von dem Lumineszenzmaterial eigentümlich sind, umfasst.

3. Verfahren nach Anspruch 1, wobei der Schritt des Messens (1002) der Quantifizierungsphasenverzögerung und der Schritt des Verwendens der elektrooptischen Anlage jeweils das Betreiben eines Phasenkomparators (304) umfassen, um eine Phasenverzögerung mit einer konstanten Modulationsfrequenz zu bestimmen.

4. Verfahren nach Anspruch 3, wobei die konstante Frequenz im Bereich von 1 kHz bis 1 MHz liegt.

5. Verfahren nach Anspruch 1, wobei der Schritt des Messens (1002) der Quantifizierungsphasenverzögerung das Modulieren der optischen Erregungsquelle (208), um eine zeitlich veränderliche Frequenz entsprechend einem Muster zu emittieren, umfasst und

der Schritt des Verwendens der elektrooptischen Anlage einen Schritt des Modulierens der zweiten Lichtquelle (302), damit sie im selben Muster emittiert, umfasst.

6. Verfahren nach Anspruch 5, wobei der Schritt des Messens (1002) der Quantifizierungsphasenverzögerung mehrmals ausgeführt wird und der Korrekturschritt (1010) eine entsprechende Mehrzahl wahrer Lumineszenzphasenverzögerungen schafft.

7. Verfahren nach Anspruch 6, wobei die mehreren wahren Lumineszenzphasenverzögerungen über ein Zeitintervall hinweg im Wesentlichen konstant sind, es sei denn, dass sie durch ein Systemrauschen, das von der externen Phasenverzögerung verschieden ist, beeinträchtigt werden.

8. Verfahren nach Anspruch 1, wobei das Lumineszenzmaterial, das im Schritt des Messens (1002) der Quantifizierungsphasenverzögerung verwendet wird, ein Material enthält, das Lumineszemissionscharakteristiken besitzt, die für eine Sauerstoffkonzentration empfindlich sind, und ferner den Schritt des Verwendens der wahren Lumineszenzphasenverzögerung des Korrekturschrittes (1010), um eine Sauerstoffkonzentration in einem Analyten zu schätzen, umfasst.

9. Verfahren nach Anspruch 8, wobei das Lumineszenzmaterial Metallo-Porphyrin enthält.

10. Verfahren nach Anspruch 8, wobei das Lumineszenzmaterial einen Ruthenium-Komplex enthält.

11. Verfahren nach Anspruch 1, wobei der Schritt des Messens (1002) der Quantifizierungsphasenverzögerung das Versorgen der optischen Erregungsquelle (208) mit Energie umfasst, damit sie in einem Muster emittiert, das aus der Gruppe gewählt ist, die aus einer Rechteckwelle, einer Sinuswelle, einem periodischen Impulszug und Kombinationen hiervon besteht; und

der Schritt des Verwendens der elektrooptischen Anlage das Erregen der zweiten Lichtquelle (302) in demselben Muster umfasst.

12. Verfahren nach Anspruch 1, wobei der Schritt des Messens (1002) der Quantifizierungsphasenverzögerung das Erregen der optischen Erregungsquelle (208) umfasst, damit sie bei einer oder mehreren Frequenzen im Bereich von 1 MHz bis 2 GHz emittiert; und

der Schritt des Verwendens der elektrooptischen Anlage das Erregen der zweiten Lichtquelle (302), damit sie mit derselben einen oder denselben mehreren Frequenzen emittiert.

13. Verfahren nach Anspruch 1, das ferner einen Schritt des Anwendens der Lumineszenzlebensdauermessung umfasst, um eine Analytkonzentration zu quantifizieren.

**14.** Verfahren nach Anspruch 13, wobei der Analyt aus der Gruppe gewählt ist, die aus Glukose, pH, Ionen und Kombinationen hiervon besteht.

**15.** Verfahren nach Anspruch 1, wobei der Schritt des Messens (1002) der Quantifizierungsphasenverzögerung das Modulieren der optischen Erregungsquelle (208) mit einer Frequenz, die sich von einer Modulationsfrequenz unterscheidet, die im Schritt des Korrigierens (1010) einer externen Phasenverzögerung verwendet wird, zur Folge hat.

**16.** Verfahren nach Anspruch 1, wobei der Schritt des Messens (1002) der Quantifizierungsphasenverzögerung die Verwendung einer Servorückkopplungsschleife (1008) zur Folge hat, um eine Bestimmung der Phase zwischen einem Erregungssignal und einer Lumineszenzemission zu optimieren.

**17.** Verfahren nach Anspruch 1, wobei der Schritt des Messens (1002) der Quantifizierungsphasenverzögerung das Modulieren der optischen Emissionsquelle (208), um eine konstante Phasenverschiebung über dem Lumineszenzmaterial zu erzielen, zur Folge hat.

**18.** Verfahren nach Anspruch 1, wobei der Schritt des Messens (1002) der Quantifizierungsphasenverzögerung das Modulieren der optischen Erregungsquelle (208), um eine von der Modulationsfrequenz abhängige Phasenverschiebung über dem Lumineszenzmaterial zu erzielen, zur Folge hat.

**19.** Verfahren nach Anspruch 1, wobei der Schritt des Messens (1002) der Quantifizierungsphasenverzögerung und der Schritt des Verwendens der elektrooptischen Anlage das Abwärtsumsetzen eines detektierten Signals in einem Phasenkomparator (306) umfassen.

**20.** Verfahren nach Anspruch 1, wobei der Schritt des Messens (1002) der Quantifizierungsphasenverzögerung das Verwenden der ersten Lichtquelle (208) umfasst, um Licht in einem im Wesentlichen anderen Wellenlängenband als jenem zu emittieren, das für eine Emissionswellenlänge existiert, die dem Lumineszenzmaterial eigentümlich ist.

**21.** Verfahren nach Anspruch 20, wobei die zweite Lichtquelle (302) in einem Bereich von 800-1100 nm emittiert.

**22.** Verfahren nach Anspruch 1, das in einem Wiederholungszyklus ausgeführt wird, wobei der Schritt des Verwendens der elektrooptischen Anlage abwechselnd in Bezug auf den Schritt des Messens der Quantifizierungsphasenverzögerung ausgeführt wird.

**23.** Verfahren nach Anspruch 1, wobei der Schritt des Messens (1002) der Quantifizierungsphasenverzögerung mehrmals ausgeführt wird und der Schritt des Verwendens der elektrooptischen Anlage weniger oft als in dieser Mehrzahl ausgeführt wird, um die Kalibrierungsphasenverzögerung auf einer periodischen Basis zu aktualisieren, die verwendet werden kann, um den Korrekturschritt auszuführen.

**24.** Verfahren nach Anspruch 1, wobei der Schritt des Verwendens der elektrooptischen Anlage für die Bestimmung einer Kalibrierungsphasenverzögerung das Aufzeichnen der Kalibrierungsphasenverzögerung,
das mehrmalige Ausführen des Schrittes des Messens (1002) der Quantifizierungsphasenverzögerung, um mehrere Quantifizierungsphasenverzögerungswerte bereitzustellen, umfasst,
und in dem Schritt des Korrigierens (1010) das Verwenden der aufgezeichneten Phasenverzögerung in Zuordnung zu den mehreren Quantifizierungsphasenverzögerungswerten umfasst.

**25.** Verfahren nach Anspruch 1, das ferner das Verwenden der wahren Lumineszenzphasenverzögerung zum Berechnen einer Lumineszenzlebensdauer oder einer Referenz-Analytkonzentration umfasst.

**26.** System (300) zum Bestimmen einer Phasenverzögerung und/oder einer Lumineszenzlebensdauer eines Lumineszenzmaterials, mit:

Mitteln zum Messen (1002) einer Quantifizierungsphasenverzögerung in dem Lumineszenzmaterial unter Verwendung einer elektrooptischen Anlage in einem ersten optischen Weg, der eine optische Erregungsquelle (208) enthält, wobei die Quantifizierungsphasenverzögerung unter Verwendung eines Signals gemessen wird, das teilweise eine externe Phasenverzögerung repräsentiert;
Mitteln zum Verwenden der elektrooptischen Anlage, um eine Kalibrierungsphasenverzögerung durch Modulieren einer zweiten Lichtquelle (302) in einem zweiten Lichtweg (304) durch das Lumineszenzmaterial zu bestimmen, wobei die zweite Lichtquelle (302) Licht emittiert, die keine merkliche Lumineszenz von dem Lumineszenzmaterial verursacht; und

Mitteln zum Korrigieren der externen Phasenverzögerung durch Entfernen der Kalibrierungsphasenverzögerung aus der Quantifizierungsphasenverzögerung, um eine wahre Lumineszenzphasenverzögerung zu schätzen.

27. System (300) nach Anspruch 26, wobei die Mittel zum Verwenden der elektrooptischen Anlage Mittel zum Emittieren von Licht von der zweiten Lichtquelle in Wellenlängen, die Emissionen von dem Lumineszenzmaterial eigentümlich sind, enthalten.

28. System (300) nach Anspruch 26, wobei die Mittel zum Messen der Quantifizierungsphasenverzögerung und die Mittel zum Verwenden der elektrooptischen Anlage jeweils Mittel enthalten, um einen Phasenkomparator (306) zu betreiben, um eine Phasenverzögerung mit einer konstanten Modulationsfrequenz zu bestimmen.

29. System (300) nach Anspruch 28, wobei die konstante Frequenz in einem Bereich von 1 kHz bis 1 MHz liegt.

30. System (300) nach Anspruch 26, wobei die Mittel zum Messen der Quantifizierungsphasenverzögerung Mittel enthalten, um die optische Erregungsquelle (208) zu modulieren, damit sie mit einer zeitlich veränderlichen Frequenz in Übereinstimmung mit einem Muster emittiert, und

die Mittel für die Verwendung der elektrooptischen Anlage Mittel enthalten, um die zweite Lichtquelle (302) zu modulieren, damit sie in demselben Muster emittiert.

31. System (300) nach Anspruch 30, wobei die Mittel zum Messen der Quantifizierungsphasenverzögerung die Quantifizierung mehrmals messen und die Mittel zum Korrigieren eine entsprechende Mehrzahl der wahren Lumineszenzphasenverzögerungen bereitstellen.

32. System (300) nach Anspruch 26, wobei das von den Mitteln zum Messen der Quantifizierungsphasenverzögerung verwendete Lumineszenzmaterial ein Material enthält, das Lumineszenzemissionscharakteristiken besitzt, die für eine Sauerstoffkonzentration empfindlich sind, ferner mit Mitteln für die Verwendung der wahren Lumineszenzphasenverzögerung des Korrekturschrittes, um eine Sauerstoffkonzentration in einem Analyten zu schätzen.

33. System (300) nach Anspruch 32, wobei das Lumineszenzmaterial Metallo-Porphyrin enthält.

34. System (300) nach Anspruch 32, wobei das Lumineszenzmaterial einen Ruthenium-Komplex enthält.

35. System (300) nach Anspruch 26, wobei die Mittel zum Messen der Quantifizierungsphasenverzögerung Mittel enthalten, um die optische Erregungsquelle (208) zu erregen, damit sie in einem Muster emittiert, das aus der Gruppe gewählt ist, die aus einer Rechteckwelle, einer Sinuswelle, einem periodischen Impulszug und Kombinationen hiervon besteht; und

die Mittel zum Verwenden der elektrooptischen Anlage Mittel enthalten, um die zweite Lichtquelle (302) in demselben Muster mit Energie zu versorgen.

36. System (300) nach Anspruch 26, wobei die Mittel zum Messen der Quantifizierungsphasenverzögerung Mittel enthalten, um die optische Erregungsquelle (208) zu erregen, damit sie bei einer oder mehreren Frequenzen, die im Bereich von 1 MHz bis 2 GHz liegen, emittiert; und

die Mittel für die Verwendung der elektrooptischen Anlage Mittel enthalten, um die zweite Lichtquelle (302) zu erregen, damit sie bei derselben einen oder denselben mehreren Frequenzen emittiert.

37. System (300) nach Anspruch 26, das ferner Mittel enthält, um die Lumineszenzlebensdauermessung anzuwenden, um eine Analytkonzentration zu quantifizieren.

38. System (300) nach Anspruch 37, wobei der Analyt aus der Gruppe gewählt ist, die aus Glukose, pH, Ionen und Kombinationen hiervon besteht.

39. System (300) nach Anspruch 1, wobei die Mittel zum Messen der Quantifizierungsphasenverzögerung Mittel enthalten, um die optische Erregungsquelle mit einer Frequenz zu modulieren, die sich von einer Modulationsfrequenz unterscheidet, die in den Mitteln zum Korrigieren der externen Phasenverzögerung verwendet wird.

40. System (300) nach Anspruch 26, wobei die Mittel zum Messen der Quantifizierungsphasenverzögerung Mittel enthalten, um eine Servorückkopplungsschleife zu verwenden, um eine Bestimmung der Phase zwischen einem Erregungssignal und einer Lumineszenzemission zu optimieren.

**41.** System (300) nach Anspruch 26, wobei die Mittel zum Messen der Quantifizierungsphasenverzögerung Mittel enthalten, um die optische Emissionsquelle zu modulieren, um eine konstante Phasenverschiebung über dem Lumineszenzmaterial zu erzielen.

**42.** System (300) nach Anspruch 26, wobei die Mittel zum Messen der Quantifizierungsphasenverzögerung Mittel enthalten, um die optische Erregungsquelle zu modulieren, um eine von der Modulationsfrequenz abhängige Phasenverschiebung über dem Lumineszenzmaterial zu erzielen.

**43.** System (300) nach Anspruch 26, wobei die Mittel zum Messen der Quantifizierungsphasenverzögerung und die Mittel für die Verwendung der elektrooptischen Anlage Mittel enthalten, um ein detektiertes Signal in einem Phasenkomparator abwärts umzusetzen.

**44.** System (300) nach Anspruch 26, wobei die Mittel zum Messen der Quantifizierungsphasenverzögerung Mittel enthalten, um die erste Lichtquelle zu verwenden, damit sie Licht in einem im Wesentlichen anderen Wellenlängenband als jenem emittiert, das für eine Emissionswellenlänge existiert, die dem Lumineszenzmaterial eigentümlich ist.

**45.** System (300) nach Anspruch 44, wobei die zweite Lichtquelle (302) in einem Bereich von 800-1100 nm emittiert.

**46.** System (300) nach Anspruch 45, das mit Steuerbefehlen programmiert ist, um in einem Wiederholungszyklus zu arbeiten, wobei die Mittel für die Verwendung der elektrooptischen Anlage abwechselnd in Bezug auf die Mittel zum Messen der Quantifizierungsphasenverzögerung arbeiten.

**47.** System (300) nach Anspruch 26, wobei die Mittel für die Verwendung der elektrooptischen Anlage, um eine Kalibrierungsphasenverzögerung zu bestimmen, Mittel zum Aufzeichnen der Kalibrierungsphasenverzögerung und Mittel zum mehrmaligen Ausführen des Schrittes des Messens der Quantifizierungsphasenverzögerung, um mehrere Quantifizierungsphasenverzögerungswerte bereitzustellen, enthalten; und die Mittel zum Korrigieren die aufgezeichnete Phasenverzögerung in Zuordnung zu den mehreren Quantfizierungsphasenverzögerungswerten verwenden.

**48.** System (300) nach Anspruch 26, das ferner Mittel enthält, um die wahre Lumineszenzphasenverzögerung zu verwenden, um eine Lumineszenzlebensdauer oder eine Referenz-Analytkonzentration zu berechnen.

**Revendications**

**1.** Procédé pour déterminer au moins un élément parmi un retard de phase et une durée de vie de luminescence d'une substance luminescente, comportant les étapes consistant à :

mesurer (1002) un retard de phase de quantification dans la substance luminescente en utilisant un équipement électro-optique sur un premier trajet optique qui inclut une source d'excitation optique (208), où le retard de phase de quantification est mesuré (1002) en utilisant un signal qui représente en partie un retard de phase parasite ;

utiliser l'équipement électro-optique pour déterminer un retard de phase de calibrage en commandant une seconde source optique (302) sur un second trajet optique (304) à travers la substance luminescente, la seconde source optique (302) émettant de la lumière qui n'engendre pas une luminescence sensible de la substance luminescente ; et

corriger (1010) le retard de phase parasite en ôtant le retard de phase de calibrage du retard de phase de quantification afin d'évaluer un retard de phase de luminescence réel.

**2.** Procédé selon la revendication 1, dans lequel l'étape d'utilisation de l'équipement électro-optique inclut l'émission de lumière à partir de la seconde source optique (302) à des longueurs d'onde qui sont inhérentes à des émissions à partir de la substance luminescente.

**3.** Procédé selon la revendication 1, dans lequel l'étape de mesure (1002) du retard de phase de quantification et l'étape d'utilisation de l'équipement électro-optique incluent chacune la mise en fonctionnement d'un comparateur de phase (304) pour déterminer un retard de phase à une fréquence de modulation constante.

**4.** Procédé selon la revendication 3, dans lequel la fréquence constante varie de 1 kHz à 1 MHz.

**5.** Procédé selon la revendication 1, dans lequel l'étape de mesure (1002) du retard de phase de quantification inclut la modulation de la source d'excitation optique (208) pour émettre à une fréquence variant dans le temps conformément à un modèle, et
l'étape d'utilisation de l'équipement électro-optique inclut une étape de modulation de la seconde source optique (302) pour émettre selon le même modèle.

**6.** Procédé selon la revendication 5, dans lequel l'étape de mesure (1002) du retard de phase de quantification est mise en oeuvre une pluralité de fois et l'étape de correction (1010) fournit une pluralité correspondante des retards de phase de luminescence réels.

**7.** Procédé selon la revendication 6, dans lequel la pluralité des retards de phase de luminescence réels est sensiblement constante sur un intervalle de temps, sauf lorsqu'elle est affectée par le bruit de système autre que le retard de phase parasite.

**8.** Procédé selon la revendication 1, dans lequel la substance luminescente utilisée à l'étape de mesure (1002) du retard de phase de quantification comporte une substance ayant des caractéristiques d'émission de luminescence qui sont sensibles à une concentration d'oxygène, et comportant en outre une étape consistant à utiliser le retard de phase de luminescence réel de l'étape de correction (1010) pour évaluer une concentration d'oxygène dans un analyte.

**9.** Procédé selon la revendication 8, dans lequel la substance luminescente inclut une métallo-porphyrine.

**10.** Procédé selon la revendication 8, dans lequel la substance luminescente inclut un complexe de ruthénium.

**11.** Procédé selon la revendication 1, dans lequel l'étape de mesure (1002) du retard de phase de quantification inclut la mise sous tension de la source d'excitation optique (208) pour émettre selon un modèle choisi parmi le groupe constitué d'une onde carrée, d'une onde sinusoïdale, d'un train d'impulsions périodique, et de combinaisons de ceux-ci ; et
l'étape d'utilisation de l'équipement électro-optique inclut la mise sous tension de la seconde source optique (302) selon le même modèle.

**12.** Procédé selon la revendication 1, dans lequel l'étape de mesure (1002) du retard de phase de quantification inclut la mise sous tension de la source d'excitation optique (208) pour émettre à une ou plusieurs fréquences variant de 1 MHz à 2 GHz ; et
l'étape d'utilisation de l'équipement électro-optique inclut la mise sous tension de la seconde source optique (302) pour émettre à la même fréquence ou aux mêmes fréquences.

**13.** Procédé selon la revendication 1, comportant en outre une étape consistant à appliquer la mesure de durée de vie de luminescence afin de quantifier une concentration d'analyte.

**14.** Procédé selon la revendication 13, dans lequel l'analyte est choisi parmi le groupe constitué de glucose, de pH, d'ions et de combinaisons de ceux-ci.

**15.** Procédé selon la revendication 1, dans lequel l'étape de mesure (1002) du retard de phase de quantification entraîne une modulation de la source d'excitation optique (208) à une fréquence qui diffère d'une fréquence de modulation utilisée à l'étape de correction (1010) du retard de phase parasite.

**16.** Procédé selon la revendication 1, dans lequel l'étape de mesure (1002) du retard de phase de quantification entraîne l'utilisation d'une boucle d'asservissement (1008) pour optimiser une détermination de phase entre un signal d'excitation et une émission de luminescence.

**17.** Procédé selon la revendication 1, dans lequel l'étape de mesure (1002) du retard de phase de quantification entraîne la modulation de la source d'émission optique (208) pour obtenir un déphasage constant à travers la substance luminescente.

**18.** Procédé selon la revendication 1, dans lequel l'étape de mesure (1002) du retard de phase de quantification entraîne la modulation de la source d'excitation optique (208) pour obtenir un déphasage dépendant de la fréquence de modulation à travers la substance luminescente.

19. Procédé selon la revendication 1, dans lequel l'étape de mesure (1002) du retard de phase de quantification et l'étape d'utilisation de l'équipement électro-optique incluent toutes les deux une conversion descendante d'un signal détecté au niveau d'un comparateur de phase (306).

20. Procédé selon la revendication 1, dans lequel l'étape de mesure (1002) du retard de phase de quantification inclut l'utilisation de la première source optique (208) pour émettre de la lumière dans une bande de longueurs d'onde sensiblement différente de celle qui existe pour une longueur d'onde d'émission qui est inhérente à la substance luminescente.

21. Procédé selon la revendication 20, dans lequel la seconde source optique (302) émet dans une plage de 800 à 1 100 nm.

22. Procédé selon la revendication 1 mis en oeuvre dans un cycle de répétition, dans lequel l'étape d'utilisation de l'équipement électro-optique est mise en oeuvre en alternance par rapport à l'étape de mesure du retard de phase de quantification.

23. Procédé selon la revendication 1, dans lequel l'étape de mesure (1002) du retard de phase de quantification est mise en oeuvre une pluralité de fois et l'étape d'utilisation de l'équipement électro-optique est mise en oeuvre moins de fois que la pluralité de fois afin de mettre à jour le retard de phase de calibrage sur une base périodique qui peut être utilisée pour mettre en oeuvre l'étape de correction.

24. Procédé selon la revendication 1, dans lequel l'étape d'utilisation de l'équipement électro-optique pour déterminer un retard de phase de calibrage inclut l'enregistrement du retard de phase de calibrage, la mise en oeuvre de l'étape de mesure (1002) du retard de phase de quantification une pluralité de fois afin de fournir une pluralité de valeurs de retard de phase de quantification ; et à l'étape de correction (1010), l'utilisation du retard de phase enregistré en association avec la pluralité de valeurs de retard de phase de quantification.

25. Procédé selon la revendication 1, comportant en outre l'utilisation du retard de phase de luminescence réel pour calculer une durée de vie de luminescence ou une concentration d'analyte de référence.

26. Système (300) pour déterminer au moins un élément parmi un retard de phase et une durée de vie de luminescence d'une substance luminescente, comportant :

    des moyens pour mesurer (1002) un retard de phase de quantification dans la substance luminescente en utilisant un équipement électro-optique sur un premier trajet optique qui inclut une source d'excitation optique (208), où le retard de phase de quantification est mesuré en utilisant un signal qui représente en partie un retard de phase parasite ;
    des moyens pour utiliser l'équipement électro-optique pour déterminer un retard de phase de calibrage en modulant une seconde source optique (302) sur un second trajet optique (304) à travers la substance luminescente, la seconde source optique (302) émettant de la lumière qui n'engendre pas une luminescence sensible de la substance luminescente ; et
    des moyens pour corriger le retard de phase parasite en ôtant le retard de phase de calibrage du retard de phase de quantification afin d'évaluer un retard de phase de luminescence réel.

27. Système (300) selon la revendication 26, dans lequel les moyens pour utiliser l'équipement électro-optique incluent des moyens pour émettre de la lumière à partir de la seconde source optique à des longueurs d'onde qui sont inhérentes à des émissions à partir de la substance luminescente.

28. Système (300) selon la revendication 26, dans lequel les moyens pour mesurer le retard de phase de quantification et les moyens pour utiliser l'équipement électro-optique incluent chacun des moyens pour mettre en fonctionnement un comparateur de phase (306) afin de déterminer un retard de phase à une fréquence de modulation constante.

29. Système (300) selon la revendication 28, dans lequel la fréquence constante varie dé 1 kHz à 1 MHz.

**30.** Système (300) selon la revendication 26, dans lequel les moyens pour mesurer le retard de phase de quantification incluent des moyens pour moduler la source d'excitation optique (308) afin d'émettre à une fréquence variant dans le temps conformément à un modèle, et
les moyens pour utiliser l'équipement électro-optique incluent des moyens pour moduler la seconde source optique (302) pour émettre selon le même modèle.

**31.** Système (300) selon la revendication 30, dans lequel les moyens pour mesurer le retard de phase de quantification mesurent la quantification une pluralité de fois, et les moyens de correction fournissent une pluralité correspondante des retards de phase de luminescence réels.

**32.** Système (300) selon la revendication 26, dans lequel la substance luminescente utilisée par les moyens pour mesurer le retard de phase de quantification comportent une substance ayant des caractéristiques d'émission de luminescence qui sont sensibles à une concentration d'oxygène, et comportant en outre des moyens pour utiliser le retard de phase de luminescence réel de l'étape de correction afin d'évaluer une concentration d'oxygène dans un analyte.

**33.** Système (300) selon la revendication 32, dans lequel la substance luminescente inclut une métallo-porphyrine.

**34.** Système (300) selon la revendication 32, dans lequel la substance luminescente inclut un complexe de ruthénium.

**35.** Système (300) selon la revendication 26, dans lequel les moyens pour mesurer le retard de phase de quantification incluent des moyens pour mettre sous tension la source d'excitation optique (208) pour émettre selon un modèle choisi parmi le groupe constitué d'une onde carrée, d'une onde sinusoïdale, d'un train d'impulsions périodique, et de combinaisons de ceux-ci ; et
les moyens pour utiliser l'équipement électro-optique incluent des moyens pour mettre sous tension la seconde source optique (302) selon le même modèle.

**36.** Système (300) selon la revendication 26, dans lequel les moyens pour mesurer le retard de phase de quantification incluent des moyens pour mettre sous tension la source d'excitation optique (208) pour émettre à une ou plusieurs fréquences variant de 1 MHz à 2 GHz ; et
les moyens pour utiliser l'équipement électro-optique incluent des moyens pour mettre sous tension la seconde source optique (302) pour émettre à la même fréquence ou aux mêmes fréquences.

**37.** Système (300) selon la revendication 26, comportant en outre des moyens pour appliquer la mesure de durée de vie de luminescence afin de quantifier une concentration d'analyte.

**38.** Système (300) selon la revendication 37, dans lequel l'analyte est choisi parmi le groupe constitué de glucose, de pH, d'ions et de combinaisons de ceux-ci.

**39.** Système (300) selon la revendication 1, dans lequel les moyens pour mesurer le retard de phase de quantification incluent des moyens pour moduler la source d'excitation optique à une fréquence qui diffère d'une fréquence de modulation utilisée dans les moyens pour corriger le retard de phase parasite.

**40.** Système (300) selon la revendication 26, dans lequel les moyens pour mesurer le retard de phase de quantification incluent des moyens pour utiliser une boucle d'asservissement afin d'optimiser une détermination de phase entre un signal d'excitation et une émission de luminescence.

**41.** Système (300) selon la revendication 26, dans lequel les moyens pour mesurer le retard de phase de quantification incluent des moyens pour moduler la source d'émission optique afin d'obtenir un déphasage constant à travers la substance luminescente.

**42.** Système (300) selon la revendication 26, dans lequel les moyens pour mesurer le retard de phase de quantification incluent des moyens pour moduler la source d'excitation optique afin d'obtenir un déphasage dépendant de la fréquence de modulation à travers la substance luminescente.

**43.** Système (300) selon la revendication 26, dans lequel les moyens pour mesurer le retard de phase de quantification et les moyens pour utiliser l'équipement électro-optique incluent tous les deux des moyens pour effectuer une conversion descendante d'un signal détecté au niveau d'un comparateur de phase.

**44.** Système (300) selon la revendication 26, dans lequel les moyens pour mesurer le retard de phase de quantification incluent des moyens pour utiliser la première source optique pour émettre de la lumière dans une bande de longueurs d'onde sensiblement différente de celle qui existe pour une longueur d'onde d'émission qui est inhérente à la substance luminescente.

**45.** Système (300) selon la revendication 44, dans lequel la seconde source optique (302) émet dans une plage de 800 à 1 100 nm.

**46.** Système (300) selon la revendication 45 programmé avec des instructions de commande pour fonctionner dans un cycle de répétition dans lequel les moyens pour utiliser l'équipement électro-optique fonctionnent en alternance par rapport aux moyens pour mesurer le retard de phase de quantification.

**47.** Système (300) selon la revendication 26, dans lequel les moyens pour utiliser l'équipement électro-optique afin de déterminer un retard de phase de calibrage incluent des moyens pour enregistrer le retard de phase de calibrage, des moyens pour mettre en oeuvre l'étape de mesure du retard de phase de quantification une pluralité de fois afin de fournir une pluralité de valeurs de retard de phase de quantification ; et les moyens de correction utilisent le retard de phase enregistré en association avec la pluralité de valeurs de retard de phase de quantification.

**48.** Système (300) selon la revendication 26, comportant en outre des moyens pour utiliser le retard de phase de luminescence réel afin de calculer une durée de vie de luminescence ou une concentration d'analyte de référence.

Fig. 1
(Prior Art)

Fig. 2
(Prior Art)

Fig. 3

Fig. 4

Fig. 5

Fig. 6

Fig. 7

Fig. 8

Fig. 9

**FIG. 10**

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4845368 A, Demas
- US 5043286 A, Khalil
- US 4716363 A, Dukes
- US 6157037 A, Danielson
- US 6673626 B1, Rabinovich
- US 6602716 B1

- WO 0122066 A1
- EP 0702226 B1
- US 5646734 A
- US 5196709 A
- EP 19880316 A
- EP 0259973 A2


**Non-patent literature cited in the description**

- **A. Arnaud ; D I Forsyth ; T Sun ; Z Y Zhang ; K T V Grattan.** Strain and temperature effects on Erbium-doped fiber for decay-time based sensing. *Rev. Sci. Instrum.,* 2000, vol. 71, 104-8
- **Hai-Jui Lin ; Henryk Szmacinski ; Joseph R. Lakowicz.** Lifetime-Based pH Sensors: Indicators for Acidic Environments. *Analytical Biochemistry,* 1999, vol. 269, 162-167
- **Q. Chang ; L. Randers-Eichhom ; J.R. Lakowicz ; G. Rao.** *Biotechnology Progress,* 1998, vol. 14, 326-331
- Fluorescence energy transfer sensor for metal ions. **Sheila Smith.** Proc. SPIE. Advances in Fluorescence Sensing Technology II, May 1995, vol. 2388, 171-181
- Topics in Fluorescence Spectroscopy. vol. 4
- Topics in Fluorescence Spectroscopy. 1999, vol. 1
- **Venkatesh Vadde ; Vivek Srinivas.** A closed loop scheme for phase-sensitive fluorometry. *American Institute of Physics, Rev. Sci. Instrum.,* July 1995, vol. 66 (7), 3750
- **Lakowicz.** 2-GHz frequency-domain fluorometer. *Rev. Sci. Instrum.,* October 1986, vol. 57 (10
- **Papkovsky, D. B.** Luminescent porphyrins as probes for biosensors. *Sens and Act B,* 1993, vol. 11, 293-300

- **Papkovsky, D.-B.** New Oxygen sensors and their application to Biosensing. *Sens and Act B,* 1995, vol. 29, 213-218
- **J. N. Demas ; B. A. DeGraff.** Design and Application of Highly Luminescent Transition Metal Complexes. *Anal. Chem.,* 1991, vol. 63 (17), 829-37
- **Arnaud ; Forsyth ; Sun ; Zhang ; Grattan.** Strain and temperature effects on Erbium-doped fiber for decay-time based sensing. *Rev. Sci. Instrum.,* 2000, vol. 71, 104-8
- **Chang ; Randers-Eichhorn ; Lakowicz ; Rao.** *Biotechnology Progress,* 1998, vol. 14, 326-331
- **Demas, DeGraff.** Design and Application of Highly Luminescent Transition Metal Complexes. *Anal. Chem.,* 1991, vol. 63 (17), 829-37
- **Lin, Szmacinski ; Lakowicz.** Lifetime-Based pH Sensors: Indicators for Acidic Environments. *Analytical Biochemistry,* 1999, vol. 269, 162-167
- **Papkovsky, D. B.** New Oxygen sensors and their application to Biosensing. *Sens and Act B,* 1995, vol. 29, 213-218
- Fluorescence energy transfer sensor for metal ions. **Smith.** Proc. SPIE. vol. 2388, 171-181
- Advances in Fluorescence Sensing Technology II. May 1995
- A closed loop scheme for phase-sensitive fluorometry. **Vadde ; Srinivas.** Rev. Sci. Instrum. American Institute of Physics, July 1995, vol. 66, 3750